# EUROPÄISCHE PATENTSCHRIFT

(11) **EP 0 812 719 B1**
(45) Veröffentlichungstag und Bekanntmachung des Hinweises auf die Patenterteilung: **10.01.2001**
(21) Anmeldenummer: 97107048.7
(22) Anmeldetag: 29.04.1997
(51) Int. Cl.: B60K 17/16

(54) **Lagerung eines Achsgetriebegehäuses eines Kraftfahrzeuges**
Mounting for the differential gearbox of a motor vehicle
Montage du boîtier de différentiel d'un véhicule à moteur

(30) Priorität: 15.06.1996 DE 19623936
(43) Veröffentlichungstag der Anmeldung: 17.12.1997
(73) Patentinhaber: DaimlerChrysler AG, 70567 Stuttgart (DE)
(72) Erfinder: Kleinschmit, Einhard, 73732 Esslingen (DE); Reimold, Harald, 75031 Eppingen (DE); Tattermusch, Peter, 73732 Esslingen (DE)

(56) Entgegenhaltungen:
- DE-A- 1 430 893
- DE-A- 2 319 943
- DE-A- 4 135 361
- DE-C- 875 442
- GB-A- 919 680
- US-A- 2 806 542
- US-A- 2 818 128
- US-A- 4 779 834

## Beschreibung

Die Erfindung betrifft eine Lagerung eines Achsgetriebegehäuses, insbesondere bei einem Hinterachsgetriebe eines Kraftfahrzeuges nach dem Oberbegriff des Patentanspruchs 1.

Während ähnliche Lagerungen bereits in DE-OS 15 55 176 und GB 2 204 839 A beschrieben sind, ist eine gattungsgemäße Lagerung aus DE-A-14 30 893 bekannt.

Hiervon ausgehend beschäftigt sich die Erfindung mit dem Problem, bei der gattungsgemäßen Lagerung des Achsgetriebes über den schwenkbaren Hebel insbesondere eine mit Bezug auf die Fahrzeuglängsachse symmetrische Lagerung des Getriebegehäuses mit einfachen Mitteln funktionssicher zu erreichen.

Eine Lösung hierzu zeigt die Erfindung durch eine gattungsgemäße Lagerung mit den kennzeichnenden Merkmalen des Patentanspruchs 1 auf.

Wie im Prinzip bereits bei der gattungsgemäßen Lagerung wird auch bei der Lösung nach der Erfindung zumindest ein Teil der in Fahrzeuglängsrichtung an dem Getriebegehäuse auftretenden Kräfte über einen in dem Trägergestell einerseits und an dem Achsgetriebegehäuse andererseits schwenkbar gelagerten Hebel übertragen, wobei die Anlenkpunkte in Richtung der Fahrzeughochachse voneinander beabstandet sind. Dadurch können bei relativ geringen Verformungen des elastischen Lagerwerkstoffes innerhalb der Lager des Trägergestelles über die Hebelarmwirkung des Hebels vergrößerte Auslenkungen an dem anderen Ende des mit dem Getriebegehäuse schwenkbar verbundenen Hebels in Fahrzeuglängsrichtung erreicht werden. In den anderen Richtungen, in denen die Lager innerhalb des Trägergestelles nicht über einen von dem Hebel ausgehenden Hebelarm belastet werden, wirken sie entsprechend der Elastizität ihrer Lagerwerkstoffe, das heißt sie wirken in diesen Richtungen wegen der dort nicht über einen Hebelarm erfolgenden Belastung steifer. Die den Hebel mit dem Getriebegehäuse verbindenden beiden Lager, die jeweils mit Bezug auf die Fahrzeugachse zu beiden Seiten des Getriebegehäuses liegen, können reine unelastische Schwenklager sein. In diesem Fall geht die Elastizität der Lagerung allein von der Anbindung des Hebels an einen zugehörigen Querträger des Trägergestelles aus. Insgesamt besitzt das Trägergestell einen vorderen und hinteren Querträger.

Vorteilhafte Ausgestaltungen der Erfindung sind Gegenstand der Unteransprüche.

Das Trägergestell kann nach den Ansprüchen 2 bzw. 3 entweder elastisch oder fest mit der Fahrzeugkarosserie verbunden sein. Bei einer festen Verbindung kann es ein integrierter Bestandteil der Karosserie sein und damit eine konstruktiv einfache Lösung darstellen, die lediglich etwas weniger komfortabel gegenüber einer elastischen Anbindung ist.

Bei besonders zweckmäßigen Ausgestaltungen nach den Ansprüchen 4 und 5 übernimmt der erfindungsgemäße Hebel in dem Trägergestell die Funktion des vorderen, vor dem Achsgetriebe liegenden Querträgers, der in diesem Fall über elastische Lager mit den übrigen Teilen des Trägergestelles verbunden ist.

Die elastische Anbindung des Trägergestelles an die Karosserie einerseits und die elastische Anbindung des die Funktion des vorderen Querträgers ausübenden, erfindungsgemäß ausgebildeten und gelagerten Hebels an die Längsträger, an denen die dem Getriebegehäuse zugeordneten Fahrzeugräder angelenkt sind, andererseits, ermöglicht bei von der Fahrbahn auf die Räder ausgeübten Kräften, insbesondere Seitenkräften bei Kurvenfahrten, ein elastisches seitliches Verbiegen der Längsträger im Bereich des vorderen Querträgers. Hierdurch werden die an den betreffenden Längsträgern angelenkten Räder bei Kurvenfahrten in Richtung eines Untersteuerns verstellt.

Ausführungsbeispiele der Erfindung sind in der Zeichnung dargestellt.

Es zeigen in jeweils perspektivischer Darstellung
- Fig. 1: eine erfindungsgemäße Lagerung eines Getriebegehäuses über einen zweiseitig an dem Getriebegehäuse angelenkten Gelenkhebel,
- Fig. 2: eine zweite Ausfürung der erfindungsgemäßen Getriebegehäuselagerung mit einem als Querträger des Trägergestelles des Getriebegehäuses dienenden Gelenkhebel,
- Fig. 3 a: einen Schnitt durch ein elastisches Lager nach Linie IIIa-IIIa bzw. IIIb-IIIb in Fig. 1 in einer ersten Ausführung,

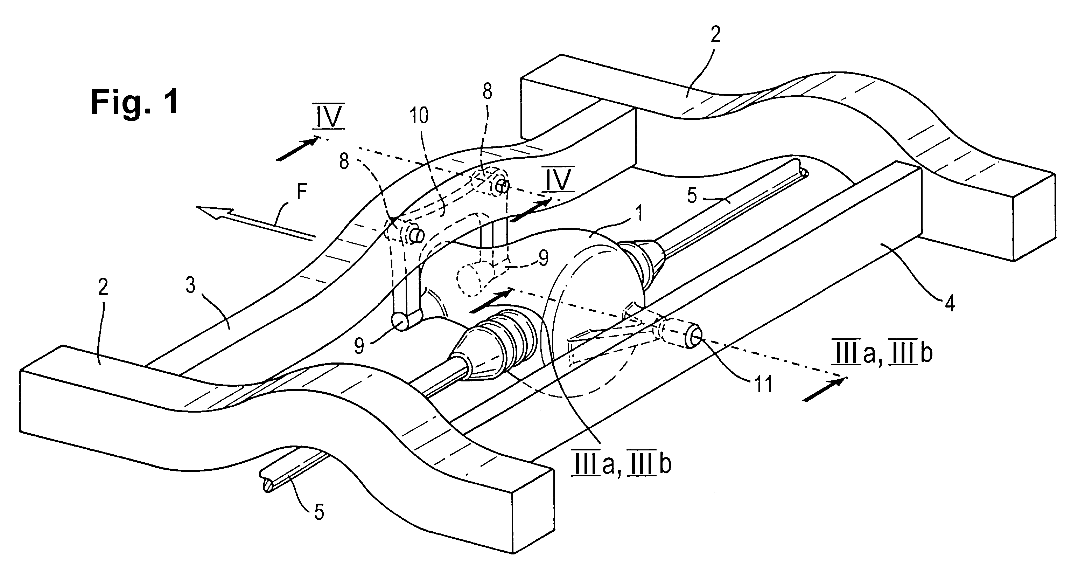

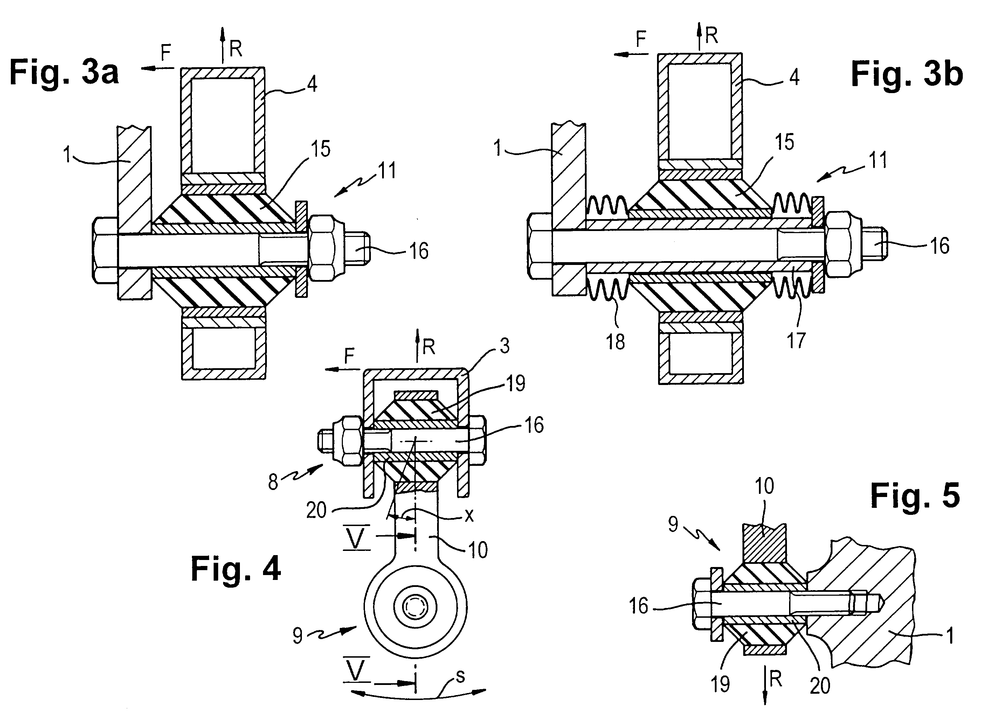

- Fig. 3 b: einen Schnitt durch ein elastisches Lager nach Linie IIIa-IIIa bzw. IIIb-IIIb in Fig. 1 in einer zweiten Ausführung,
- Fig. 4: einen Schnitt durch ein elastisches Lager nach Linie IV-IV in Fig. 1,
- Fig. 5: einen Schnitt durch ein elastisches Lager nach Linie V-V in Fig. 4.

Ein Trägergestell für eine elastische Lagerung des Getriebegehäuses 1 eines Hinterachsgetriebes eines Fahrzeuges besitzt zwei Längsträger 2 sowie zwei Querträger, nämlich einen in Vorwärts-Fahrtrichtung vorne liegenden vorderen Querträger 3 sowie einen hinteren Querträger 4. Die Vorwärts-Fahrtrichtung des Fahrzeuges, an dessen Karosserie das Trägergestell insbesondere elastisch angebunden ist, ist in den Zeichnungen mit jeweils einem Pfeil F angegeben. An der Seite des vorderen Querträgers 3 mündet die Antriebs-Kardanwelle in das Getriebegehäuse 1 ein. In dem hinteren Bereich dieses Getriebegehäuses 1 sind Gelenkwellen 5 für angetriebene Räder des Fahrzeuges angelenkt. Diese Räder sind zwischen den Querträgern 3 und 4 an den Längsträgern 2 in zeichnerisch nicht dargestellter Weise angelenkt.

Die Aufhängung des Getriebegehäuses 1 erfolgt elastisch an den beiden Querträgern 3 und 4.

Bei der Ausführung nach Fig. 1 ist das Getriebegehäuse 1 über ein elastisches Lager 11 an dem hinteren Querträger 4 angebunden.

Für die in Fahrtrichtung vorne liegende Lagerung des Getriebegehäuses 1 ist ein U-förmiger Hebel 10 vorgesehen. Dieser das Getriebegehäuse 1 in Richtung senkrecht zur Fahrzeuglängsachse umgreifende Hebel 10 ist im Bereich seines U-Bogens an dem vorderen Querträger 3 zweifach gelagert. Dabei erfolgt die Lagerung in zwei in einer senkrecht zur Hochachse des Fahrzeuges verlaufenden Ebene entfernt voneinander angeordneten elastischen Lagern 8. Durch diese zweifache Lagerung ist eine Aufnahme der auf das Getriebegehäuse 1 einwirkenden Antriebsmomente möglich. Für die Anlenkung an dem in Richtung der Fahrzeughochachse anderen Ende des Hebels 10 dienen zwei Lager 9 mit einer quer zur Fahrtrichtung horizontal ausgerichteten Schwenkachse. Diese an jeder Querseite des Getriebegehäuses 1 angebrachten elastisch wirkenden Lager 9 können als rein unelastisch wirkende Schwenklager ausgebildet sein. Im zuletzt genannten Fall ist die Elastizität der Lagerung allein von den Lagern 8 aufzubringen. Der Hebel 10 wirkt zwischen den Lagern 8 und 9 als Hebelarm mit Bezug auf die elastische Anbindung des Getriebegehäuses 1 an dem vorderen Querträger 3. Durch die Wirkung dieses Hebelarmes ist an den Lagern 9 in Fahrzeuglängsrichtung ein gegenüber der Verformung des elastischen Materials innerhalb der Lager 8 vergrößerter Verschiebeweg erreichbar. Diese Wirkung wird bei einer Beschreibung einer in der Fig. 4 gezeigten Lagerung des Hebels 10 zwischen dem Getriebegehäuse 1 und dem vorderen Querträger 3 weiter unten noch näher erläutert werden. Das elastische Lager 11 an dem hinteren Querträger 4 muß auf die durch die Lagerung über den Hebel 10 des Getriebegehäuses 1 erzielbare weiche Längslagerung entsprechend abgestimmt sein. Als Beispiel für ein derart abzustimmendes Lager ist in Fig. 3 a ein Schubgummilager dargestellt. Bei diesem Lager ist eine mit Gummi als einem Elastomer 15 kraftschlüssig ausgefüllte Doppelhülse fest mit dem hinteren Querträger 4 verbunden. Die innere Hülse dieser Doppelhülse ist mit einer Spannschraube 16 fest mit einer Lasche des Getriebegehäuses 1 verbunden. Bei dem derart ausgebildeten Lager 11 erfolgen Längs- und Querverschiebungen innerhalb des Elastomeren 15. Ein solches Lager ist bezüglich seiner elastischen Verformbarkeit so ausgestaltet, daß diese in Fahrtrichtung F größer als in senkrecht hierzu verlaufenden Richtungen R ist.

Möglich ist es auch, die elastische Lagerung in Fahrtrichtung allein durch die elastischen Lager 8 - gegebenenfalls zusammen mit den Lagern 9, wenn diese einen elastischen Schwenkwiderstand besitzen - an dem vorderen Querträger 3 aufzubringen und die elastischen Lager 11 an dem hinteren Querträger 4 in Fahrtrichtung F frei verschiebbar zu gestalten. Eine solche Lagerausführung zeigt die Fig. 3 b. Dort ist eine ebenfalls mit einem Elastomer 15 kraftschlüssig ausgefüllte Doppelhülse lediglich radial außen in dem hinteren Querträger 4 fest gelagert, während sie radial innen in Fahrtrichtung F gleitend auf einer Gleithülse 17 gelagert ist. Die Gleithülse 17 ist über eine Spannschraube 16 fest mit einer Lasche des Getriebegehäuses 1 verbunden. Die Gleitfläche der Gleithülse 17 ist in ihrem außerhalb der Doppelhülse zu liegen kommenden Bereichen jeweils durch eine zwischen der Spannschraube 16 und der Doppelhülse aufgespannte Balg-Dichtung 18 gegen Verschmutzung geschützt.

Die Ausbildung der Lager 8 und 9 ist in Fig. 4 (Lager 8 und 9) bzw. Fig. 5 (Lager 9) dargestellt. Die Lager 8 wirken allseits elastisch und erlauben insbesondere Schwenkbewegungen in Fahrzeuglängsrichtung in einer zu der Fahrzeughochachse parallelen Ebene. An den jeweilig in ein Lager 8 mündenden Enden des Hebels 10 ist jeweils ein Auge in den Hebel 10 eingeformt und mit einem Elastomer-Ring 19 kraftschlüssig ausgefüllt. Dieser Elastomer-Ring 19 ist wiederum kraftschlüssig mit einer radial innen liegenden Hülse 20 verbunden. Die Hülse 20 eines Lagers 8 ist jeweils über eine Spannschraube 16 fest mit dem vorderen Querträger 3 verbunden. Das Schwenken erfolgt durch elastische Materialverformung innerhalb des Elastomer-Ringes 19. Gleichartig aufgebaute einzelne Lager 9 sind an dem anderen Ende des Hebels 10 vorgesehen. Die Lager 9 können auch so aufgebaut sein, daß sie Schwenkbewegungen des Hebels 10 ohne eine elastische Verformung des Elastomer-Materials 19 aufnehmen können. In diesem Fall sind die jeweiligen Hülsen 20 dieser Lager 9 stirnseitig nicht verspannt, so daß sie jeweils auf der Spannschraube 16 frei rotieren können.

Der durch ein Verschwenken des Hebels im Bereich der den Hebel 10 mit dem Getriebegehäuse 1 verbindenden Lager 9 über den von dem Hebel 10 ausgehenden Hebelarm erreichbare, im Vergleich zu der Verformung des elastischen Materials der Lager 8, vergrößerte Verschiebeweg ist in der Zeichnung 4 mit x angegeben. Der dort zusätzlich eingetragene Doppelpfeil S deutet den Schwenkweg des Hebels 10 an.

Eine in Fahrtrichtung gegenüber allen anderen Richtungen weichere Lagerung des Getriebegehäuses 1 innerhalb der Trägergestelles kann bei einer Lagerung durch einen Hebel 10 an dem vorderen Querträger 3 bei der Lagerung an dem hinteren Querträger 4 über eine in der weiter oben definierten Fahrzeugebene quer zur Fahrzeuglängsachse ausgerichtete Blattfeder ergänzt und verbessert werden. Eine solche Blattfeder kann beispielsweise bei einem Lager 11 nach der Fig. 3 b fest mit der durch einen Elastomer 15 ausgefüllten Doppelhülse verbunden sein. Die freie Verschiebbarkeit dieser Doppelhülse wird dann durch die Federkraft der Blattfeder gesteuert. Eine solche in der Zeichnung nicht dargestellte Blattfeder dient ausschließlich einer Steuerung der Lagerelastizitäten in Fahrtrichtung.

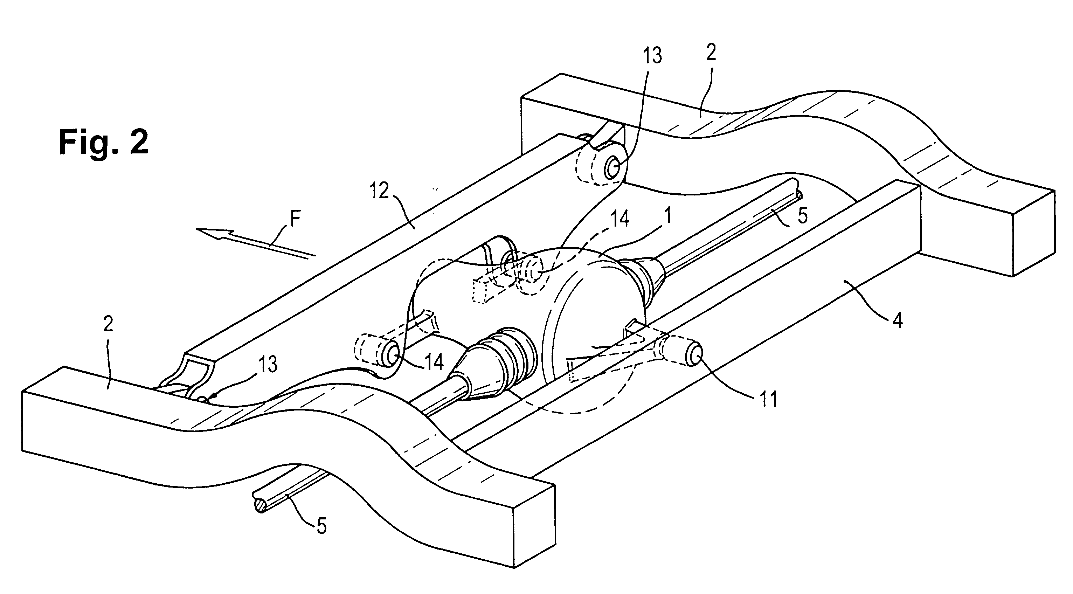

Eine Weiterentwicklung der Ausführung nach Fig. 1 ist in Fig. 2 dargestellt. Dort erfüllt der erfindungsgemäße, an dem vorderen Ende des Getriebegehäuses (1) angelenkte Hebel die Funktion eines vorderen Querträgers des Trägergestelles, indem er in einer mit 12 bezeichneten Ausführung direkt über elastische Lager 13 mit den Längsträgern 2 des Trägergestells verbunden ist. Um eine in der eingangs definierten Fahrzeugebene beidseitige Lagerung des Getriebegehäuses 1 an dem funktionell als Querträger wirkenden Hebel 12 zu erhalten, umgreift dieser den vorderen Teil des Getriebegehäuses 1 U-förmig. An den freien Enden des U-Schenkels ist dieser Hebel 12 über Lager 14 in einer Art nach beispielsweise den Lagern 9 in Fig. 4 elastisch an dem Getriebegehäuse 1 angelenkt. Die elastischen Lager 13, über die der funktionell als Querträger ausgebildete Hebel 12 an den Längsträgern 2 des Trägergestelles angebunden ist, können den Lagern 8 nach Fig. 4 entsprechen.

Die elastische Verbindung zwischen dem Querträgerfunktion besitzenden Hebel 12 und den beiden Längsträgern 2 des Trägergestelles weist nicht nur die erfindungsgemäßen Vorteile mit Bezug auf die Getriebegehäuse-Lagerung auf, sondern ist darüber hinaus auch noch für das Fahrverhalten des Fahrzeuges von zusätzlichem Vorteil. Dies ergibt sich daraus, daß die Räder an den Längsträgern angelenkt sind, wodurch eine gewisse Quernachgiebigkeit im Bereich des Querträgerfunktion besitzenden Hebels 12 bei in die Räder von der Fahrbahn eingeleiteten Kräften, insbesondere Seitenkräften bei Kurvenfahrten, zu einer Verbesserung der Spurverhältnisse des Fahrzeuges führen kann. So führen die bei Kurvenfahrten über die Räder in die Längsträger eingeleiteten Seitenkräfte zu einer Verstellung der Räder in Richtung eines Untersteuern des Fahrzeuges. Voraussetzung für eine solche Wirkung ist, daß die Längsträger 2 elastisch an der Fahrzeugkarosserie befestigt sind. Denn nur dann ist eine Querverbiegung der Längsträger 2 im Bereich des Querträgerfunktion besitzenden Hebels 12 möglich.

## Patentansprüche

1. Lagerung eines Achsgetriebegehäuses, insbesondere bei einem Hinterachsgetriebe, eines Kraftfahrzeuges in einem Trägergestell mit jeweils einer in mindestens einer Richtung elastisch wirkenden Anlenkung an beiden in Fahrtrichtung liegenden Enden des Getriebegehäuses (1), bei der die Lagerung zumindest an einem der beiden Enden des Getriebegehäuses (1) ausschließlich über mindestens einen in einer zur Fahrzeughoch- und Längsachse parallelen Ebene schwenkbaren Hebel (10, 12) erfolgt, der in Richtung der Fahrzeughochachse in voneinander beabstandeten Positionen an einerseits dem Getriebegehäuse (1) und in andererseits dem Trägergestell angelenkt ist, wobei zumindest die Lagerung des Hebels (10, 12) gegenüber dem Trägergestell über mindestens ein elastisches Lager (8, 13) gegeben ist,
**dadurch gekennzeichnet,**
daß der Hebel (10) U-förmig ausgebildet ist mit in Richtung der Fahrzeughochachse verlaufenden U-Schenkeln, die das Getriebegehäuse (1) zwischen sich einschließen.

2. Lagerung nach Anspruch 1,
**dadurch gekennzeichnet,**
daß das Trägergestell elastisch mit der Fahrzeugkarosserie verbunden ist.

3. Lagerung nach Anspruch 2,
**dadurch gekennzeichnet,**
daß das Trägergestell fester integrierter Bestandteil der Fahrzeugkarosserie ist.

4. Lagerung nach einem der vorhergehenden Ansprüche,
**dadurch gekennzeichnet,**
daß die Anlenkung über den Hebel (12) an dem in Fahrtrichtung vorne liegenden Ende des Getriebegehäuses (1) vorgesehen ist und daß der Hebel (12) als vorderer Querträger an dem, einen in Fahrtrichtung hinter dem Getriebegehäuse (1) liegenden hinteren Querträger (4) besitzenden Trägergestell angelenkt ist.

5. Kraftfahrzeug mit einer Lagerung nach Anspruch 4,
**dadurch gekennzeichnet,**
daß die dem Getriebegehäuse (1) zugeordneten Fahrzeugräder an Längsträger (2) des Trägergestells zwischen dem Hebel (12) und dem hinteren Querträger (4) angelenkt sind.

## Claims

1. A mounting for an axle transmission housing, particularly with a rear axle drive, of a motor vehicle in a bearing frame having a respective coupling, acting elastically in at least one direction, with both ends of the transmission housing (1) lying in the direction of travel, mounting being provided at least at one of the two ends of the transmission housing (1) exclusively by means of at least one lever (10, 12) capable of pivoting in a plane parallel with the normal and longitudinal axis of the vehicle, which is coupled, in the direction of the normal axis of the vehicle, at positions spaced apart from one another on the transmission housing (1) on the one hand and in the bearing frame on the other, the lever (10, 12) being mounted by means of at least one bearing (8, 13) acting elastically relative to the bearing frame,
**characterised in that**
the lever (10) is of a U-shaped design with the legs of the U extending in a direction of the normal axis of the vehicle enclosing the transmission housing (1) between them.

2. A mounting as claimed in claim 1,
**characterised in that**
the bearing frame is elastically connected to the vehicle body.

3. A mounting as claimed in claim 2,
**characterised in that**
the bearing frame is a fixed, integrated element of the vehicle body.

4. A mounting as claimed in one of the preceding claims,
**characterised in that**
the coupling is provided by means of the lever (12) on the end of the transmission housing (1) lying towards the front in the direction of travel and in that the lever (12), as front cross-member, is coupled on the bearing frame having a rear cross-member (4) lying behind the transmission housing (1) in the direction of travel.

5. A motor vehicle with a mounting as claimed in claim 4,
**characterised in that**
the vehicle wheels assigned to the transmission housing (1) are coupled with longitudinal members (2) of the bearing frame between the lever (12) and the rear cross-member (4).

## Revendications

1. Montage sur paliers d'un carter d'engrenage d'essieu, en particulier pour une transmission pour essieu arrière, d'un véhicule automobile, dans un bâti support, avec chaque fois une articulation, agissant élastiquement en au moins une direction, sur les deux extrémités situées dans la direction de roulage, du carter de transmission (1), pour laquelle le montage sur paliers, au moins à l'une des deux extrémités du carter de transmission (1), s'effectue exclusivement par l'intermédiaire d'au moins un levier (10, 12) susceptible de pivoter dans un plan parallèle à l'axe vertical et à l'axe longitudinal du véhicule, levier articulé au carter de transmission (1), en des positions espacées l'une de l'autre, dans la direction de l'axe vertical du véhicule, d'une part, et articulé au bâti support, d'autre part, au moins le montage sur paliers du levier (10, 12) par rapport au bâti support étant effectué par l'intermédiaire d'au moins un palier élastique (8, 13),
caractérisé en ce que
le levier (10) est en forme de U, avec des branches de U s'étendant dans la direction de l'axe vertical du véhicule, incluant entre elles le carter de transmission (1)

2. Montage sur paliers selon la revendication 1, caractérisé en ce que le bâti support est relié élastiquement à la carrosserie du véhicule.

3. Montage sur paliers selon la revendication 2, caractérisé en ce que le bâti support est un constituant intégré à demeure de la carrosserie du véhicule.

4. Montage sur paliers selon l'une des revendications précédentes, caractérisé en ce que le montage articulé par l'intermédiaire du levier (12) est prévu sur l'extrémité, située à l'avant dans la direction de roulage, du carter de transmission (1), et en ce que le levier (12), réalisé sous forme de traverse avant, est articulé sur le bâti support, comportant une traverse arrière (4) située derrière le carter de transmission (1) dans la direction de roulage.

5. Véhicule automobile avec un montage sur paliers selon la revendication 4, caractérisé en ce que les roues de véhicule associées au carter de transmission (1) sont articulées sur le longeron (2) du bâti support, entre le levier (12) et la traverse arrière (4).
